(19) Europäisches Patentamt
European Patent Office
Office européen des brevets

(11) EP 1 125 750 B1

(12) **EUROPEAN PATENT SPECIFICATION**

(45) Date of publication and mention of the grant of the patent:
**28.05.2008 Bulletin 2008/22**

(51) Int Cl.:
***B41J 3/407*** *(2006.01)*

(21) Application number: **01112362.7**

(22) Date of filing: **08.06.1993**

(54) **Label printing apparatus**

Etikettendruckgerät

Appareil d'impression d'étiquettes

(84) Designated Contracting States:
**DE FR GB**

(30) Priority: **11.06.1992 GB 9212439**
**15.01.1993 GB 9300748**

(43) Date of publication of application:
**22.08.2001 Bulletin 2001/34**

(62) Document number(s) of the earlier application(s) in accordance with Art. 76 EPC:
**96110283.7 / 0 737 587**
**93304435.6 / 0 574 225**

(73) Proprietor: **DYMO**
**9100 Sint-Niklaas (BE)**

(72) Inventors:
- **Beadman, Michael Andrew**
**Royston, Hertfordshire SG8 OLP (GB)**
- **Martin, Paul**
**Cambridge CB2 5UD (GB)**

(74) Representative: **Style, Kelda Camilla Karen et al**
**Page White & Farrer**
**Bedford House**
**John Street**
**London, WC1N 2BF (GB)**

(56) References cited:
**EP-A- 0 473 147**
**EP-A- 0 497 352**
**EP-A- 0 534 794**
**WO-A-92/09438**
**DE-A1- 3 610 182**
**US-A- 4 827 358**
**US-A- 5 204 959**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 125 750 B1

## Description

The present invention relates to a label printing apparatus comprising input means for selecting characters for composing a label to be printed, display means for displaying the characters selected at the input means, printing means for printing said characters on an image receiving tape to produce a label, and to a method of displaying a label to be printed on an image receiving tape using a printing device, the method comprising the steps of selecting characters for composing a label to be displayed and printed.

There are now known thermal printing devices which produce labels having a length corresponding to a message to be printed as defined by a user. Such devices operate with a supply of tape arranged to receive an image and a means for transferring an image onto the tape. In one known device, a tape holding case holds a supply of image receiving tape and a supply of an image transfer ribbon, the image receiving tape and the transfer ribbon being passed in overlap through a print zone of the printing device. At the print zone, a thermal print head cooperates with a platen to transfer an image from the transfer ribbon to the tape. A printing device operating with a tape holding case of this type is described for example in EP-A-0267890 (Varitronics Inc.). In this printing device, the image receiving tape comprises an upper layer for receiving an image which is secured to a releaseable backing layer by a layer of adhesive.

In another device, the construction of the image receiving tape is such that the upper image receiving layer is transparent and receives an image on one of its faces printed as a mirror image so that it is viewed the correct way round through the other face of the tape. In this case, a double-sided adhesive layer can be secured to the upper layer, this double-sided adhesive layer having a releaseable backing layer. This latter arrangement is described for example in EP-A-0322918 and EP-A-0322919 (Brother Kogyo Kabushiki Kaisha).

Printing devices of this type also include a display means and an input means such as a keyboard for selecting characters to be printed. Selected characters are displayed on the display means and in this way a user can compose a label to be printed. When a label has been composed a print instruction is given and the printing device proceeds to print a label. Printing devices of this type also include cutting means to cut off the printed portion of the tape to enable it to be used as a label. For use as a label, the releaseable backing layer is removed from the upper layer to enable the upper layer to be secured to a surface by means of the adhesive layer. In this way, labels having a length and character arrangement determined by a user can be made.

EP 534794, which constitutes prior art for the purposes of novelty only, describes a printing device capable of printing a plurality of characters/symbols in a plurality of lines on a tape. The size of the characters/symbols is determined based upon the number of lines and the number of characters/symbols to be printed within a predetermined area. This size is selected from a finite number of stored pairs of longitudinal and lateral dots, each pair representing a character size.

However, the known printing devices have severe limitations as regards their ease of use in composing labels to be printed. In particular the characters displayed by the display means do not bear a relationship in terms of their size, spacing and position to the characters as will be printed out on the finished label. This makes it difficult for a user to perceive properly the final form of the label so that he must in general adopt a process where he composes a label, prints it and then reviews it to see how its format might be improved as regards character size, spacing and layout. Further, the characters displayed on the display are provided specifically for the display from a display font and thus do not resemble the characters to be printed.

The present invention seeks to overcome these difficulties in providing a printing apparatus having display means which is operable as a more useful visual aid to a user of such apparatus.

The present invention also seeks to provide a wider range of character sizes for printing and/or displaying.

For further information regarding the state of the art, the reader is directed to EP-A2-0473147 (Seiko Epson Corporation), WO-A1-92/09438 (Esselte Dymo N.V.), US-5204959 (Toshiba Kabushiki Kaisha), EP-A2-0497352 (Casio Computer Co., Ltd) and DE-A1-3610182 (Olympia AG).

A label printing apparatus, according to the present invention, is provided with a controller arranged to implement a preview function by controlling the display means to display, at one time, an entire label which has been formulated by a user, the controller being arranged to implement said preview function by reducing the size of the characters to be displayed to such an extent that all of the selected characters can be displayed on the display means.

Preferably, a storage means stores the characters in the form of Bezier font data, defining Bezier points for lines and curves of the characters and wherein the controller is operable to implement the preview function by applying a scaling factor to said Bezier font data, said scaling factor being dependent on the number of characters selected by a user and their layout. More preferably, common font data stored in the storage means defines each character within a predetermined character space having a height and a width defined by the nature of the character and its normal spacing with respect to adjacent characters.

Preferably, the controller is operable to determine the length of the label from the aggregate of the width of character selected by a user, the sizes of the characters having also been selected by the user.

Preferably, the controller is operable to cause a plurality of character sizes to be displayed sequentially on the display means in response to a user request so that the user may select one of said displayed character sizes.

Preferably, the controller is operable to determine an appropriate character size such that the number of characters selected by a user can be accommodated in the length of tape selected by the user. More preferably, the controller is operable to apply a scaling factor to the font data according to the appropriate character size.

Preferably, the label printing apparatus is operable to print a plurality of lines on said image receiving tape, one line being below another, and to automatically select the appropriate character size for printing and displaying such multiple lines.

Preferably, the printing means comprises a column of thermal printing elements, and the controller is operable to determine sequentially for each of a plurality of print locations spaced width wise across the character intersections (i0...i5) of lines and/or curves of that character with a print line (PL) extending height wise of the character of each print location and to generate therefrom a set of pixel data for supply to the printing means to control said column of thermal printing elements to print a column of dots corresponding to the set of pixel data defined at that print line (PL).

Preferably, different sizes of characters can be selected in response to user control of the input means, the different sized characters being produced by altering the scaling factors applied to the font data stored in the storage means.

Preferably, the label printing apparatus is capable of accommodating tapes of different widths, there being a different menu of character sizes associ ated with each width. More preferably, the label printing apparatus comprises a sensing arrangement for determining the width of the tape and to cause the controller to leave a clear part of the display corresponding to the width of the tape.

Preferably, the label printing apparatus further comprising cutting means for cutting off a portion of the image receiving tape including the label.

A method of displaying a label to be printed on an image receiving tape using a printing device, according to the present invention, is characterised by implementing a preview function to enable an entire composed label to be displayed at one time on a display means by reducing the size of the characters to be displayed to such an extent that all of the selected characters can be displayed on the display means.

Preferably, the method comprises the further steps of:

storing the characters in the form of Bezier font data; and
defining Bezier points for lines and curves of the characters;

wherein the step of implementing the preview function is carried out by applying a scaling factor to the Bezier font data, said scaling factor being dependent on the number of characters selected and their layout.

For a better understanding of the present invention and to show how the same may be carried into effect, reference will now be made by way of example to the accompanying drawings in which:-

Figure 1 is a plan view showing two cassettes inserted in a printing device;
Figure 2 is a plan view of the top surface of the printing device;
Figure 3 is a diagrammatic sketch showing the control circuitry for the printing device;
Figure 4 is a diagram showing the information stored with each character;
Figures 5a and 5b are diagrams of the display means in use to display multiline labels;
Figure 6 is a letter "S" showing intersection points; and
Figure 7 is a diagram illustrating how the intersection points are calculated.

Figure 1 shows in plan view two cassettes arranged in a cassette receiving bay 13 of a printing device. The upper cassette 2 contains a supply of image receiving tape 4 which passes through a print zone 3 of the printer to an outlet 5 of the printer. The image receiving tape 4 comprises an upper layer for receiving a printed image on one of its surfaces and having its other surface coated with an adhesive layer to which is secured a releaseable backing layer. The cassette 2 has a recess 6 for accommodating a platen 8 of the printer. The platen 8 is mounted for rotation within a cage moulding 10.

The lower cassette 7 contains a thermal transfer ribbon which extends from a supply spool to a take-up spool within the cassette 7. The thermal transfer ribbon 12 extends through the print zone 3 in overlap with the image receiving tape 4. The cassette 7 has a recess 14 for receiving a print head 16 of the printer. The print head 16 is movable between an operative position, shown in Figure 1, in which it bears against the platen and holds the thermal transfer ribbon 12 and the image receiving tape in overlap between the print head and the platen and an inoperative position in which it is moved away from the platen to release the thermal transfer ribbon and image receiving tape. In the operative position, the platen is rotated under the action of a stepper motor to cause image receiving tape to be driven past the print head and the print head is controlled to print an image onto the image receiving tape by thermal transfer of ink from the ribbon 12. The print head is a conventional thermal print head having a column of pixels each of which can be thermally activated in accordance with the desired image to be printed.

Figure 2 is a view of the printer from above. The cassette receiving bay 13 is covered by a lid 15 which is hinged along the line 17 at the rear of the printer and which can be opened from the front to reveal the cassettes in the cassette receiving bay 13. The printer also has a keyboard 106 which has a plurality of character keys CK designated generally by arrow 111 and a plurality of function keys FK which are designated by way of example with reference numerals 110,112,116 and 120. The printer also has a display 108 which is a liquid crystal graphics display.

The basic circuitry for controlling the printing device is shown in Figure 3. There is a microprocessor chip 100 having a read only memory (ROM) 102, a microprocessor 101 and random access memory capacity indicated diagrammatically by RAM 104. Additional ROM and RAM capacity can be provided by separate ROM and RAM chips connected to the microprocessor. The microprocessor 101 is connected to receive data input to it from a data input device such as the keyboard 106. The microprocessor chip 100 outputs data to drive the display 108 via the display driver chip 109 and also to drive the print head 16 and the stepper motor 18 for controlling the platen 8. The microprocessor chip also controls a cutting mechanism indicated diagrammatically in Figure 3 by cutter 17 to cut the printed tape.

The ROM 102 stores font data for defining a set of scalable alphanumeric characters, the largest size being in this example a character height of 15.5mm and a width of about 10mm depending on the nature of the character.

The liquid crystal display 108 has approximately the same height as the largest breadth of the image receiving tape, that is, in the particular example, 19mm. Other breadths of image receiving tape can be accommodated. The display has a pixel matrix of 3168 dots, with 32 dots in each column and having 99 columns. The print head 16 has one column containing 128 dots or pixels. This arrangement enables the display 108 to represent each character with one quarter of the resolution with which it is printed at the print head since the characters for display by the display means are derived from the font data stored in the ROM 102, the same font data being used to provide the characters for printing by the print head 16. When tapes of different breadths are inserted into the printing device, an automatic sensing arrangement determines the breadth of the tape and causes the controller to blank out upper and lower bands on the display to leave a clear part corresponding to the breadth of the tape. A suitable sensing arrangement is disclosed in our British Application No. 9212004.7, the contents of which are herein incorporated by reference. There can be stored a different menu of character sizes for each breadth of tape, from which a user can make his size selection.

As shown in Figure 4, the font data for each character defines a predetermined character space CS having a height h (measured in the direction of the breadth of the image receiving tape) and a width w (measured in the direction of the length of the image receiving tape). Each character is also stored with data defining its bounding box, denoted by the line BB, which is the box defined by the outermost coordinates of the character. The character space defines the normal space occupied by the character and its relation to other characters. The relationship between the bounding box BB and the character space CS is determined by the distance between their left hand edges (the left side bearing lsb). For characters such as a "j" for example, the left side bearing can have a negative value, that is the leftmost edge of the bounding box BB can lie to the left of the leftmost edge of the character space CS.

It will be appreciated that different variations of the characters can be produced from the common font data stored in a ROM 102 by manipulation by the microprocessor 101 using the memory capacity of the RAM 104. Scaling of the common font data is also carried out to produce characters of different sizes to be printed, the normal or default character size being the largest permissible sized character for a particular tape breadth. As described later, Bezier font data stores the relationship between features of a character. In order to display or print the character an appropriate scaling factor must be applied to the font data.

As the same font data is used to generate the characters both for display at the display 108 and printing at the print head 16 the spacing of the characters on the display 108 is proportional to that which will appear on the finished label. This has a big advantage to the user since characters are thus displayed with the relative size and spacing with which they will appear on the finished labels. Furthermore, where a multiple line label is to be produced, the display 108 is capable of displaying each line with its appropriate character sizes and layout as it will appear on the finished label. Additionally, the displayed character will resemble the printed character in terms of its relative features.

For features which cannot be displayed on the display 108, because the display does not have sufficient resolution to illustrate the particular form of the character, such as bold or outlined characters, a set of icons is displayed on the side of the display to provide this information. Where the number of characters is such that the length of the final label exceeds the length of the display, the part of the label currently being edited is shown on the display.

Use of the printing device will now be described. Characters to be printed are entered into the printing device using the character keys designated generally by the block 111 but in practice comprising a plurality of lettered and numbered keys CK. As each character is entered using the keyboard 106 it is supplied to the microprocessor 101 which drives the display 108 to display the characters as they are inputted. To do this, for each character which is entered, the microprocessor calls up the stored font data for forming that character from the ROM 102. As the character is stored in compressed form, this font data is then moved temporarily to the RAM 104 and is manipulated by the microprocessor 101 to generate pixel data to form the character. This pixel data is transmitted column by column in one form to the display 108 and in another form to the print head 16 for printing. The form of the pixel data takes into account the difference in resolution between the character to be displayed and the character to be printed. Character data is not passed to the print head for printing until a print operation is executed. Firstly, the characters for the label are entered and edited using the function keys on the keyboard 106 in conjunction with the display 108.

The function keys enable different versions of the stored characters to be selected, that is larger or smaller characters or stylised versions of the characters such as bold or outlined. Different sizes of the character are displayed on the display means in proportion to the way in which they will be printed on the finished label.

Each character is associated with a predetermined character space having a height and width as explained above. This height and width vary with the size of the character but in any event for each character the microprocessor determines the width of the associated character space and can use this in one mode of operation for determining the overall length of print on a label. A finished label will include not only a printed portion but also blank lead and lag spaces which are also computed by the microprocessor 101 to determine the final length of the label. The overall length of the label is then stored in the microprocessor and used to control the cutting operation required to produce the label.

In another mode, the user can input the length of label which he requires and then input a number of characters. The microprocessor then determines the most appropriate character size to accommodate the selected number of characters in that given label length. This character size is then displayed on the display 108 so that a user can visualize the finished label easily.

The production of multiple line labels will now be described with reference to Figures 5a and 5b. The first line of print is entered by selecting a number of characters as described above. These characters are displayed on the display means with the largest permissible character height for the breadth of inserted tape. If the number of characters entered is such that the width of the display is exceeded, the display scrolls to display the characters as they are entered. When a user presses a return key on the keyboard and begins to enter the next line of data, the controller will automatically drive the display means so that the first line of print is displayed with half of its original character height and the characters being entered in the second line will then be entered with characters of height to match those in the first line. This will occur for the number of lines to be input, typically four for a tape having a width of 19mm.

The user himself can override the automatic multiple line display facility as described above and can enter characters of his own selected size and these will be displayed accordingly proportionally spaced. This enables a user to edit the label using the display with certainty that the displayed version of the label will closely match that which is produced ultimately by the print head 16.

The user can produce a label having different pages, each page being a block of text occupying a section of the label. Pages can have different formats.

There follows a more detailed description of how the control circuitry operates to store and generate characters and to implement the functions outlined above.

Each character and icon which can be displayed and printed is stored in the font ROM 102 as a set of Bezier data. Bezier data is known as a storage format for characters and essentially involves the storage of each character as data defining a set of lines and curves. As is known, lines are defined by the coordinates on an (x,y) matrix of each of the end points of the line. Curves are defined by the (x,y) coordinates of three points which are defined by the Bezier equation

$$P(t) = (1-t)^2A + 2t(1-t)B + t^2C$$

which defines a curve P as a function of t where A,B,C are the three points which are stored as the Bezier data for the curve P(t).

Bezier data defining each character is stored in a particular memory space in the font ROM 102. When a key CK on the keyboard 111 is depressed to select a particular character, a signal from that key goes to address a look-up table which identifies the memory space in the font ROM 102 for that character. If the character is to be displayed or printed, the character data is called over to the RAM 104 of the microprocessor to recreate the character for display and/or printing.

When a print instruction has been received, recreation of the character is done column by column, each column of pixel data being supplied to the printhead for printing while a next column of pixel data is produced. In the described arrangement, the printhead has 128 thermal elements arranged in a column so that for each character a plurality of columns of 128 pixels are produced, each pixel being represented by a one or a zero. Thermal elements receiving pixel signals of logic one are activated to print while thermal elements receiving pixel signals of logic zero are not. Each column of pixels is produced by determining the points of intersection of a print line with the character outline, as shown in Figure 6 which illustrates the letter "S". The print line is designated PL and the points of intersection are denoted $i_o$ ... $i_5$. Figure 6 shows the principle for ease of understanding: in practice, the letter "S" is not recreated from the Bezier data and then scanned. Instead, the intersection points are calculated using data defining the position of the print line relative to the bounding box BB and the stored Bezier data for that character using an iterative algorithm which continually bisects each curve defined by the Bezier data. This is illustrated in Figure 7 where A,B and C denote the Bezier points defining the curve A,M,C. The coordinates $x_M$,$y_M$ of the "on curve" point M can be obtained by taking the mid-point of the line which joins the mid-points of the lines AB and BC. The position of the print line PL is denoted by "x". If the coordinate $x_M$ of the point M equals the position x of the print line, the intersection point i has a y coordinate $y_i$ equal to $y_M$. If this condition is not satisfied, the original curve is split into two smaller curves defined by A,D,M and M,E,C and another iteration is done on the curve containing x (A,D,M in Figure 7). In this way the microprocessor calculates the intersection points $i_o$ ... $i_5$ in Figure 6. The column of pixel data for the print head is produced by generating zeros until the first intersection location $i_o$ is reached, then generating ones until the next intersection $i_l$ is reached, then changing to zeros and so on until data for 128 pixels has been generated. This data is then transmitted to the print head and a column is printed. While this is being done, the next column of pixel data for the print head is being calculated. Once a column has been printed, the stepper motor controls the platen to rotate to move the image receiving tape 4 through one column width.

After calculating the intersection points, the RAM space required for generating the print data is relatively small, 128 bits for a column of print data and 1 byte for each intersection location. This thus reduces the overall memory requirement for the printer.

The number of print lines required to recreate a character for printing depends on the size of the character to be printed. In the described example, the print head prints 8 dots per mm across a label. The character to be displayed is also derived from the Bezier data for that character in a manner similar to that outlined for printing, except that the character is first scaled down, in this example by one quarter of the printed size. This is done by dividing all of the coordinates of the Bezier points by four and then proceeding as above to generate pixel data for transmission to the display column by column.

This method of storage and recreation also allows characters to be scaled for printing, still retaining their proportions and relative character spacing. When characters are input using the keys CK on the keyboard 111 during formulation of a label, the size of the character can be altered by depressing a size key 112 on the keyboard. This is stored as a scaling byte which is used by the microprocessor in recreation of the character to scale the Bezier coordinates before the pixel data for the print head is generated column by column as described above. The scaling of the Bezier data also affects the character space CS (see Figure 4) which decreases or increases in size according to the scaling factor selected by the size key. When a label is being formulated, data defining the label is stored as a sequence of bytes defining a character with characters and spaces and attributes (including scaling information). The label length is determined by adding together the widths of the character spaces after any required scaling and any blank spaces which the user has inserted using the blank key on the keyboard. The length of the label is based on the longest line in the formulated label. If a user has already input a desired label length, the actual label length created by the user during formulation is compared with this. If the actual label length exceeds the preset label length, the microprocessor rescales the characters by an amount which will enable the formulated label to fit within the predetermined length, if this is possible. If the actual label length is less than the preset length, the microprocessor calculates leaders and trailers to utilise the remaining length of label.

The storage of characters in a Bezier format enables scaling to be accomplished using any scaling factor while retaining proportionality and relative character spacing. This enables a large variety of sizes to be available to a user. The recreation of the displayed character from the same data as the character to be printed enables a user to see precisely the label he is formulating. The described printing device also provides an additional function to assist the user in label formulation, namely a so-called "preview function". When the preview key on the keyboard is depressed, the microprocessor causes all the characters to be reduced in size to such an extent that the whole label which has been formulated appears on the display simultaneously with the same layout as that which will be printed. While the size reduction might be such that individual characters are indecipherable, the overall appearance of the label can be ascertained before printing, and if necessary modified before the print key 120 is depressed. The scaling factor for the preview function is calculated by the microprocessor by calculating the length of the label (as described above) and comparing this to the length of the display, additionally dividing by four to take into account the difference in resolution between printing and displaying.

The printing device thus provides several user friendly functions, including in particular selection of label length and preview function. In the described embodiment a user can set a fixed length label between 40mm and 300mm. Once a user has formulated his label, the microprocessor calculates the actual length by calculating the width of each character of each line of the label and displays the length of the longest line plus a 20mm leader and 20mm trailer in a dialogue box 107 (Figure 2) on the display 108. At this point the user can increment or decrement the label length between the label length limits. In this case where the label length is enlarged the additional label length is added on both sides of the label text. In the case where the label length is reduced the microprocessor scales the text to fit the longest line within the requested length. For example:

| | |
|---|---|
| Displayed label length | = 90mm |
| User reduces this to 65mm | |
| Actual original text length | = 90-40mm (leader and trailer) |
| | = 50mm |
| Requested actual length | = 65-40mm |
| | = 25mm |
| Scaling required | = Requested actual length/Actual original length |

After this the whole label is scaled by this factor. If further text is added the required overall scaling is recalculated. This is no lower limit on the label length, allowing the software to scale the text until it disappears and the scaling factor allows the text to be scaled to any size to fit the requested length.

The preview function allows the user to see a scaled version of the label such that the layout of the entire label may be seen on the display, even when the label includes a plurality of pages of different formats.

In multiple line printing, in autosize mode, after a first line of characters has been displayed with a certain size resulting from the application of a particular scaling factor to the font data, a return key is depressed indicating that a second line is to be entered. Depression of the return key causes the controller to modify the scaling factor to display half size characters and the modified scaling factor is stored. This is repeated for subsequent entering of new lines. The scaling factors (or bytes) for printing are derived from the stored, modified scaling factors.

In both these cases the functions are available because of the properties of Bezier fonts. Since the characters are constructed from a series of lines and Bezier curves each character may be scaled to any size by use of a single scaling factor during the calculation of all the points on the character. This effect results in the limitation of final character quality being either the resolution of the display when editing or the resolution of the print head on the final printed label. In the described case the resolution of the display is chosen to be exactly one quarter that of the print head, i.e. 32 dots high versus 128 dots high for the print head, such that the display scaling factor is exactly one quarter of that utilised at the print head.

## Claims

**1.** A label printing apparatus comprising:

input means (106) for selecting characters for composing a label to be printed;
display means (108) for displaying the characters selected at the input means;
printing means (16) for printing said characters on an image receiving tape (4) to produce a label; and **characterised by**
a controller (100) arranged to implement a preview function by controlling the display means (108) to display, at one time, an entire label which has been formulated by a user, said controller (100) being arranged to implement said preview function by reducing the size of the characters to be displayed to such an extent that all of the selected characters can be displayed on the display means (108).

**2.** A label printing apparatus according to claim 1, wherein a storage means (102) stores the characters in the form of Bezier font data, defining Bezier points for lines and curves of the characters and wherein the controller (100) is operable to implement the preview function by applying a scaling factor to said Bezier font data, said scaling factor being dependent on the number of characters selected by a user and their layout.

**3.** A label printing apparatus according to claim 2, wherein common font data stored in the storage means (102) defines each character within a predetermined character space having a height and a width defined by the nature of the character and its normal spacing with respect to adjacent characters.

**4.** A label printing apparatus according to any preceding claim, wherein the controller (100) is operable to determine the length of the label from the aggregate of the width of character selected by a user, the sizes of the characters having also been selected by the user.

**5.** A label printing apparatus according to any preceding claim, wherein the controller (100) is operable to cause a plurality of character sizes to be displayed sequentially on the display means (108) in response to a user request so that the user may select one of said displayed character sizes.

**6.** A label printing apparatus according to any preceding claim, wherein the controller (100) is operable to determine an appropriate character size such that the number of characters selected by a user can be accommodated in the length of tape selected by the user.

**7.** A label printing apparatus according to claim 6, wherein the controller (100) is operable to apply a scaling factor to the font data according to the appropriate character size.

**8.** A label printing apparatus according to any preceding claim, which is operable to print a plurality of lines on said image receiving tape (4), one line being below another, and to automatically select the appropriate character size for printing and displaying such multiple lines.

**9.** A label printing apparatus according to any of claims 2 to 8, wherein the printing means (16) comprises a column of thermal printing elements; and
the controller(100) is operable to determine sequentially for each of a plurality of print locations spaced width wise across the character intersections (i0...i5) of lines and/or curves of that character with a print line (PL) extending height wise of the character of each print location and to generate therefrom a set of pixel data for supply to the printing means (16) to control said column of thermal printing elements to print a column of dots corresponding to the set of pixel data defined at that print line (PL).

**10.** A label printing apparatus according to any preceding claim, wherein different sizes of characters can be selected in response to user control of the input means (106), the different sized characters being produced by altering the scaling factors applied to the font data stored in the storage means (102).

**11.** A label printing apparatus according to any preceding claim, which is capable of accommodating tapes of different widths, there being a different menu of character sizes associated with each width.

**12.** A label printing apparatus according to claim 11, further comprising a sensing arrangement for determining the width of the tape and to cause the controller to leave a clear part of the display corresponding to the width of the tape.

**13.** A label printing apparatus according to any preceding claim, further comprising cutting means (17) for cutting off a portion of the image receiving tape including the label.

**14.** A method of displaying a label to be printed on an image receiving tape (4) using a printing device, the method comprising the steps of:

selecting characters for composing a label to be displayed and printed; and

**characterised by** implementing a preview function to enable an entire composed label to be displayed at one time on a display means (108) by reducing the size of the characters to be displayed to such an extent that all of the selected characters can be displayed on the display means (108).

**15.** A method according to claim 14, comprising the further steps of:

storing the characters in the form of Bezier font data; and
defining Bezier points for lines and curves of the characters;

wherein the step of implementing the preview function is carried out by applying a scaling factor to the Bezier font data, said scaling factor being dependent on the number of characters selected and their layout.

**Patentansprüche**

**1.** Etikettendruckvorrichtung, die Folgendes umfasst:

Eingabemittel (106) zum Wählen von Zeichen zum Erstellen eines zu druckenden Etiketts;

Anzeigemittel (108) zum Anzeigen der am Eingabemittel gewählten Zeichen;
Druckmittel (16) zum Drucken der genannten Zeichen auf einem Bildempfangsband (4), um ein Etikett zu erzeugen; und **gekennzeichnet durch**:

einen Kontroller (100), der dazu angeordnet ist, **durch** Steuern des Anzeigemittels (108) dazu, auf einmal ein gesamtes von einem Benutzer formuliertes Etikett anzuzeigen, eine Vorschaufunktion zu implementieren, wobei der genannte Kontroller (100) dazu angeordnet ist, die genannte Vorschaufunktion **durch** Reduzieren der Größe der anzuzeigenden Zeichen in einem derartigen Maß, dass alle der gewählten Zeichen auf dem Anzeigemittel (108) angezeigt werden können, zu implementieren.

**2.** Etikettendruckvorrichtung nach Anspruch 1, wobei ein Speichermittel (102) die Zeichen in Form von Bezier-Schriftdaten speichert, die Bezier-Punkte für Linien und Kurven der Zeichen definieren und wobei der Kontroller (100) wirksam ist, die Vorschaufunktion durch Anwenden eines Skalierungsfaktors auf die genannten Bezier-Schriftdaten zu implementieren, wobei der genannte Skalierungsfaktor abhängig ist von der Zahl der von einem Benutzer gewählten Zeichen und deren Anordnung.

**3.** Etikettendruckvorrichtung nach Anspruch 2, wobei gemeinsame, in dem Speichermittel (102) gespeicherte Schriftdaten jedes Zeichen in einem vorherbestimmten Zeichenraum definieren, der eine Höhe und eine Breite hat, die durch die Art des Zeichens und seinen normalen Abstand von benachbarten Zeichen definiert sind.

**4.** Etikettendruckvorrichtung nach einem der vorangehenden Ansprüche, wobei der Kontroller (100) wirksam ist, die Länge des Etiketts aus der Summe der von einem Benutzer gewählten Zeichenbreite zu bestimmen, wobei die Größe der Zeichen ebenfalls vom Benutzer gewählt wurde.

**5.** Etikettendruckvorrichtung nach einem der vorangehenden Ansprüche, wobei der Kontroller (100) wirksam ist, als Reaktion auf eine Benutzeranforderung zu bewirken, dass mehrere Zeichengrößen nacheinander auf dem Anzeigemittel (108) angezeigt werden können, so dass der Benutzer eine der genannten angezeigten Zeichengrößen wählen kann.

**6.** Etikettendruckvorrichtung nach einem der vorangehenden Ansprüche, wobei der Kontroller (100) wirksam ist, eine geeignete Zeichengröße so zu wählen, dass die Zahl der von einem Benutzer gewählten Zeichen in der vom Benutzer gewählten Bandlänge untergebracht werden kann.

**7.** Etikettendruckvorrichtung nach Anspruch 6, wobei der Kontroller (100) wirksam ist, einen Skalierungsfaktor gemäß der geeigneten Zeichengröße auf die Schriftdaten anzuwenden.

**8.** Etikettendruckvorrichtung nach einem der vorangehenden Ansprüche, die wirksam ist, mehrere Zeilen auf das genannte Bildempfangsband (4) zu drucken, wobei eine Zeile unter einer anderen liegt und automatisch die geeignete Zeichengröße zum Drucken und Anzeigen derartiger mehrerer Zeilen zu wählen.

**9.** Etikettendruckvorrichtung nach einem der Ansprüche 2 bis 8, wobei das Druckmittel (16) eine Spalte von Thermodruckelementen umfasst; und
der Kontroller (100) wirksam ist, nacheinander für jeden von mehreren Druckorten, die in der Breite in Abständen voneinander über das Zeichen angeordnet sind, Schnittpunkte (i0...i5) von Linien und/oder Kurven dieses Zeichens mit einer Drucklinie (PL) jedes Druckorts, die sich in der Höhe des Zeichens erstreckt, zu bestimmen und daraus eine Menge von Pixeldaten zu erzeugen, zur Zufuhr an das Druckmittel (16), um die genannte Spalte von Thermodruckelementen dazu zu steuern, eine Spalte von Punkten zu drucken, die der Menge von an dieser Drucklinie (PL) definierten Pixeldaten entspricht.

**10.** Etikettendruckvorrichtung nach einem der vorangehenden Ansprüche, wobei verschiedene Größen von Zeichen als Reaktion auf die Benutzersteuerung des Eingabemittels (106) gewählt werden können, wobei die Zeichen mit verschiedener Größe erzeugt werden, indem die auf die in dem Speichermittel (102) gespeicherten Schriftdaten angewandten Skalierungsfaktoren geändert werden.

**11.** Etikettendruckvorrichtung nach einem der vorangehenden Ansprüche, die in der Lage ist, Bänder verschiedener Breiten aufzunehmen, wobei mit jeder Breite ein anderes Menü von Zeichengrößen assoziiert ist.

**12.** Etikettendruckvorrichtung nach Anspruch 11, weiter umfassend eine Abfühlanordnung zum Bestimmen der Breite des Bands und um zu bewirken, dass der Kontroller einen leeren Teil der Anzeige zurücklässt, der der Breite des Bands entspricht.

13. Etikettendruckvorrichtung nach einem der vorangehenden Ansprüche, weiter umfassend ein Abschneidemittel (17) zum Abschneiden eines das Etikett umfassenden Abschnitts des Bildempfangsbands.

14. Verfahren zum Anzeigen eines unter Verwendung einer Druckvorrichtung auf einem Bildempfangsband (4) zu druckenden Etiketts, wobei das Verfahren folgende Schritte umfasst:

Wählen von Zeichen zum Erstellen eines anzuzeigenden und zu druckenden Etiketts; und
**gekennzeichnet durch** Implementieren einer Vorschaufunktion, um zu ermöglichen, dass ein gesamtes erstelltes Etikett auf einmal auf einem Anzeigemittel (108) angezeigt werden kann, indem die Größe der anzuzeigenden Zeichen in einem derartigen Maß reduziert wird, dass alle der gewählten Zeichen auf dem Anzeigemittel (108) angezeigt werden können.

15. Verfahren nach Anspruch 14, das die folgenden weiteren Schritte umfasst:

Speichern der Zeichen in Form von Bezier-Schriftdaten; und
Definieren von Bezier-Punkten für Linien und Kurven der Zeichen:

wobei der Schritt des Implementierens der Vorschaufunktion ausgeführt wird, indem ein Skalierungsfaktor auf die Bezier-Schriftdaten angewandt wird, wobei der genannte Skalierungsfaktor abhängig ist von der Zahl der gewählten Zeichen und deren Anordnung.

## Revendications

1. Appareil d'impression d'étiquettes comprenant :

un moyen d'entrée (106) pour sélectionner des caractères pour composer une étiquette à imprimer ;
un moyen d'affichage (108) pour afficher les caractères sélectionnés au niveau du moyen d'entrée ;
un moyen d'impression (16) pour imprimer lesdits caractères sur un ruban de réception d'image (4) afin de produire une étiquette ; et **caractérisé par**
un moyen de commande (100) agencé pour mettre en oeuvre une fonction d'aperçu avant impression en commandant le moyen d'affichage (108) pour qu'il affiche, en une fois, une étiquette entière qui a été composée par un utilisateur, ledit moyen de commande (100) étant agencé pour mettre en oeuvre ladite fonction d'aperçu avant impression en réduisant la dimension des caractères à afficher au point que tous les caractères sélectionnés peuvent être affichés sur le moyen d'affichage (108).

2. Appareil d'impression d'étiquettes selon la revendication 1, dans lequel un moyen de stockage (102) stocke les caractères sous la forme de données de police de caractères de Bézier, définissant des points de Bézier pour les lignes et courbes des caractères et dans lequel le moyen de commande (100) est actionnable pour mettre en oeuvre la fonction d'aperçu avant impression en appliquant un facteur d'échelle auxdites données de police de Bézier, ledit facteur d'échelle étant fonction du nombre de caractères sélectionné par un utilisateur et de leur disposition.

3. Appareil d'impression d'étiquettes selon la revendication 2, dans lequel des données de police courantes stockées dans le moyen de stockage (102) définissent chaque caractère au sein d'un espace de caractère prédéterminé ayant une hauteur et une largeur définies par la nature du caractère et son espacement normal par rapport aux caractères adjacents.

4. Appareil d'impression d'étiquettes selon l'une quelconque des revendications précédentes, dans lequel le moyen de commande (100) est actionnable pour déterminer la longueur de l'étiquette à partir de l'agrégat de la largeur de caractère sélectionnée par un utilisateur, les dimensions des caractères ayant également été sélectionnées par l'utilisateur.

5. Appareil d'impression d'étiquettes selon l'une quelconque des revendications précédentes, dans lequel le moyen de commande (100) est actionnable pour amener une pluralité de dimensions de caractères à être affichées séquentiellement sur le moyen d'affichage (108) en réponse à une demande de l'utilisateur de manière que l'utilisateur puisse sélectionner l'une desdites dimensions de caractères affichées.

**6.** Appareil d'impression d'étiquettes selon l'une quelconque des revendications précédentes, dans lequel le moyen de commande (100) est actionnable pour déterminer une dimension de caractères appropriée de manière que le nombre de caractères sélectionné par un utilisateur puisse être logé sur la longueur de ruban sélectionnée par l'utilisateur.

**7.** Appareil d'impression d'étiquettes selon la revendication 6, dans lequel le moyen de commande (100) est actionnable pour appliquer un facteur d'échelle aux données de police en fonction de la dimension de caractères appropriée.

**8.** Appareil d'impression d'étiquettes selon l'une quelconque des revendications précédentes, qui est actionnable pour imprimer une pluralité de lignes sur ledit ruban de réception d'image (4), une ligne étant au-dessous de l'autre, et pour sélectionner automatiquement la dimension de caractères appropriée pour afficher et imprimer ces lignes multiples.

**9.** Appareil d'impression d'étiquettes selon l'une quelconque des revendications 2 à 8, dans lequel le moyen d'impression (16) comprend une colonne d'éléments d'impression thermique ; et
le moyen de commande (100) est actionnable pour déterminer séquentiellement, pour chaque emplacement d'impression parmi une pluralité d'emplacements d'impression espacés dans le sens de la largeur et en travers, les intersections de caractère (i0...i5) de lignes et/ou courbes de ce caractère avec une ligne d'impression (PL) s'étendant dans le sens de la hauteur du caractère de chaque emplacement d'impression et pour en déduire un jeu de données de pixels pour transmission au moyen d'impression (16) afin de commander à ladite colonne d'éléments d'impression thermique d'imprimer une colonne de points correspondant au jeu de données de pixels défini à cette ligne d'impression (PL).

**10.** Appareil d'impression d'étiquettes selon l'une quelconque des revendications précédentes, dans lequel des dimensions différentes de caractères peuvent être sélectionnées en réponse à la commande, par l'utilisateur, du moyen d'entrée (106), les caractères de dimensions différentes étant produits en modifiant les facteurs d'échelle appliqués aux données de police stockées dans le moyen de stockage (102).

**11.** Appareil d'impression d'étiquettes selon l'une quelconque des revendications précédentes, qui est capable de loger des rubans de différentes largeurs, un menu différent de dimensions de caractères étant associé à chaque largeur.

**12.** Appareil d'impression d'étiquettes selon la revendication 11, comprenant en outre un agencement de détection pour déterminer la largeur du ruban et amener le moyen de commande à laisser en blanc une partie de l'affichage correspondant à la largeur du ruban.

**13.** Appareil d'impression d'étiquettes selon l'une quelconque des revendications précédentes, comprenant en outre un moyen de coupe (17) pour sectionner une partie du ruban de réception d'image comprenant l'étiquette.

**14.** Procédé d'affichage d'une étiquette devant être imprimée sur un ruban de réception d'image (4) en utilisant un dispositif d'impression, le procédé comprenant les étapes de :

sélection de caractères pour composer une étiquette devant être affichée et imprimée ; et

**caractérisé par** la mise en oeuvre d'une fonction d'aperçu avant impression pour permettre à une étiquette composée entière d'être affichée en une fois sur un moyen d'affichage (108) en réduisant la dimension des caractères à afficher au point que tous les caractères sélectionnés peuvent être affichés sur le moyen d'affichage (108).

**15.** Procédé selon la revendication 14, comprenant les étapes supplémentaires de :

stockage des caractères sous la forme de données de police de caractères de Bézier ; et
définition de points de Bézier pour les lignes et courbes des caractères ;

dans lequel l'étape de mise en oeuvre de la fonction d'aperçu avant impression est réalisée en appliquant un facteur d'échelle aux données de police de Bézier, ledit facteur d'échelle étant fonction du nombre de caractères sélectionné et de leur disposition.

FIG.1.

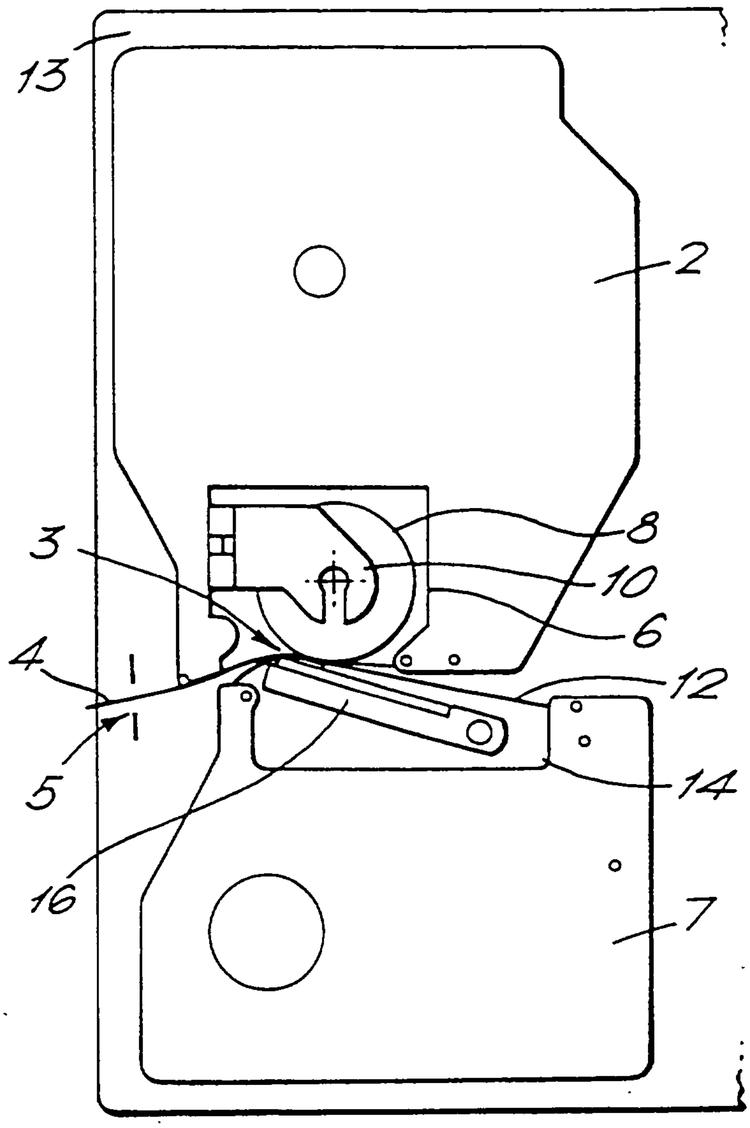


FIG.2.

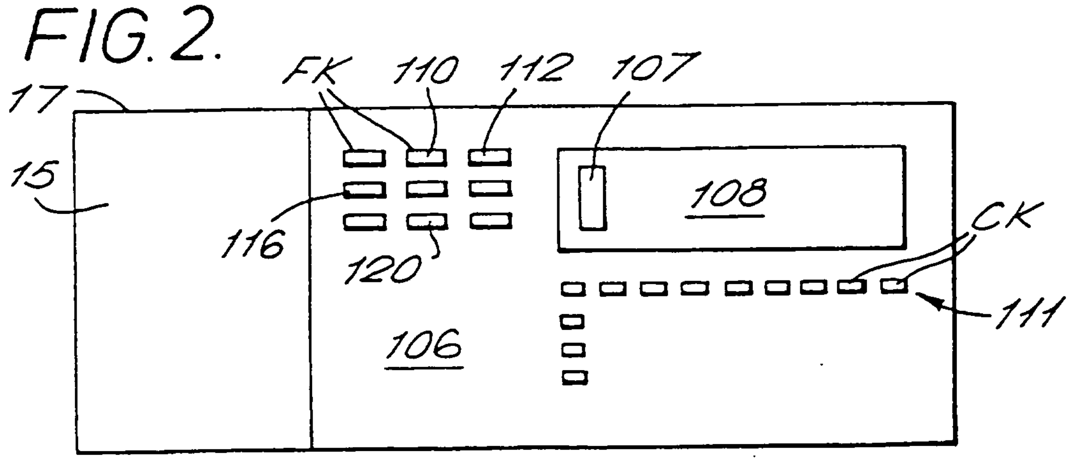

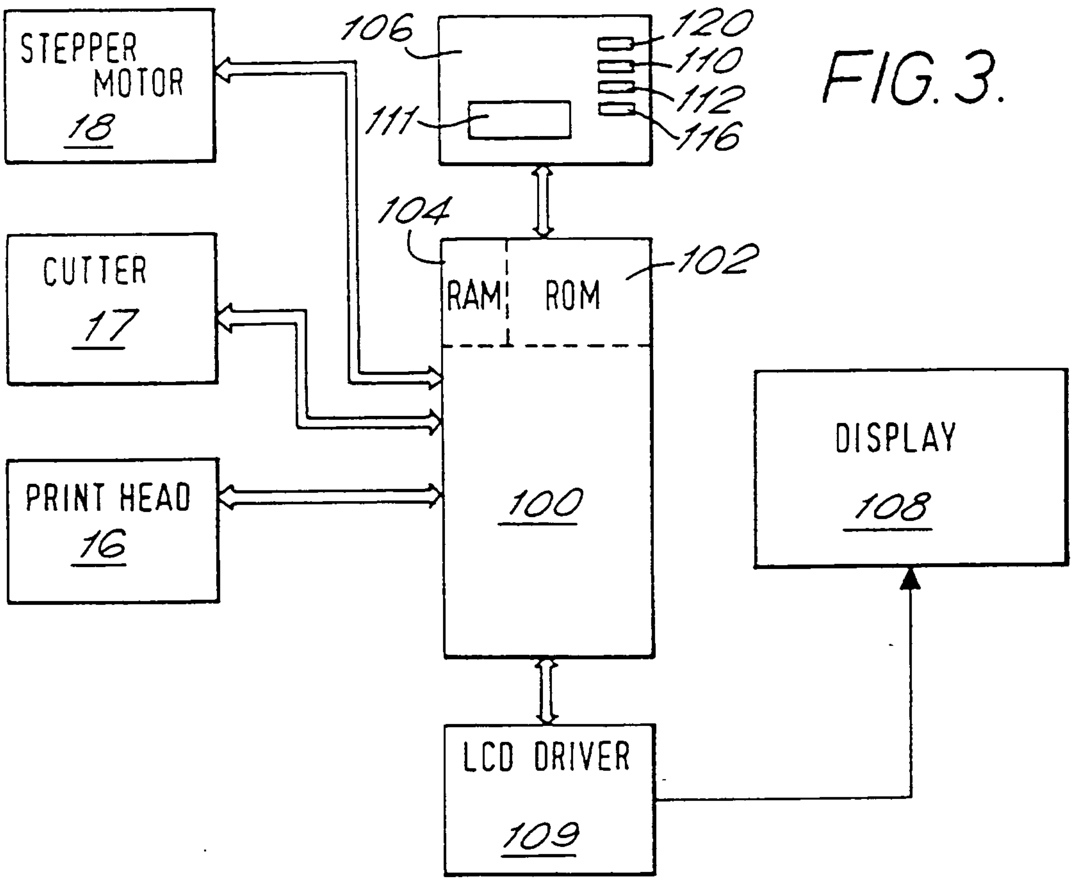
STEPPER MOTOR
18
CUTTER
17
PRINT HEAD
16
106
111
120
110
112
116
104
RAM
ROM
102
100
DISPLAY
108
LCD DRIVER
109

FIG. 3.

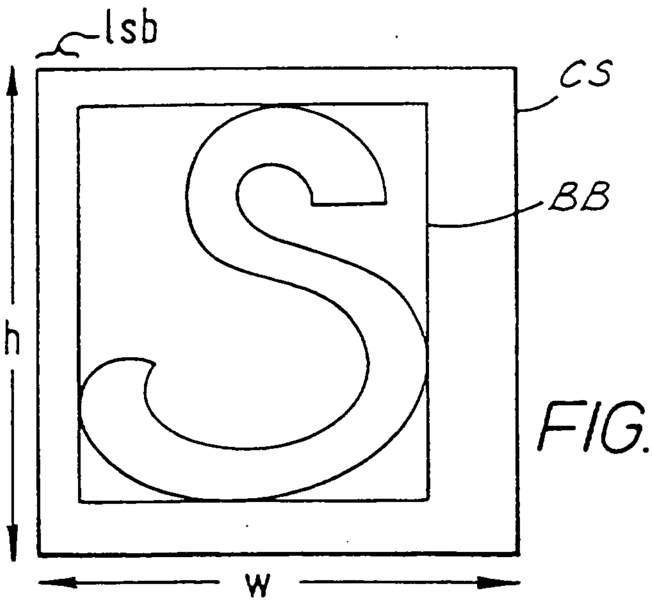
lsb
CS
BB
h
W

FIG. 4.

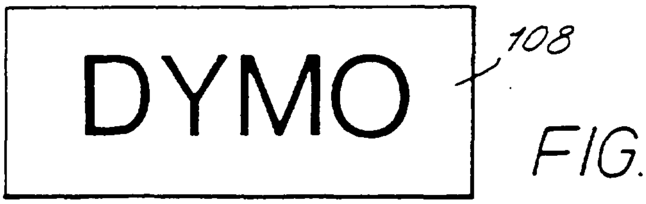


FIG.5a.

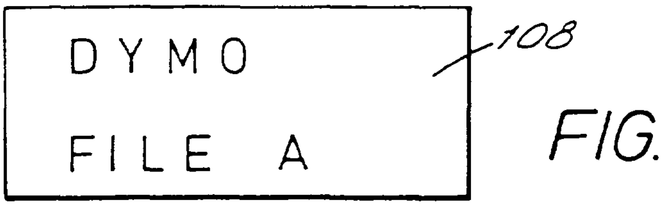


FIG.5b.

FIG.6.

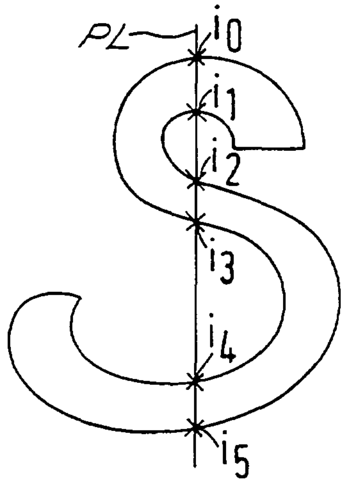


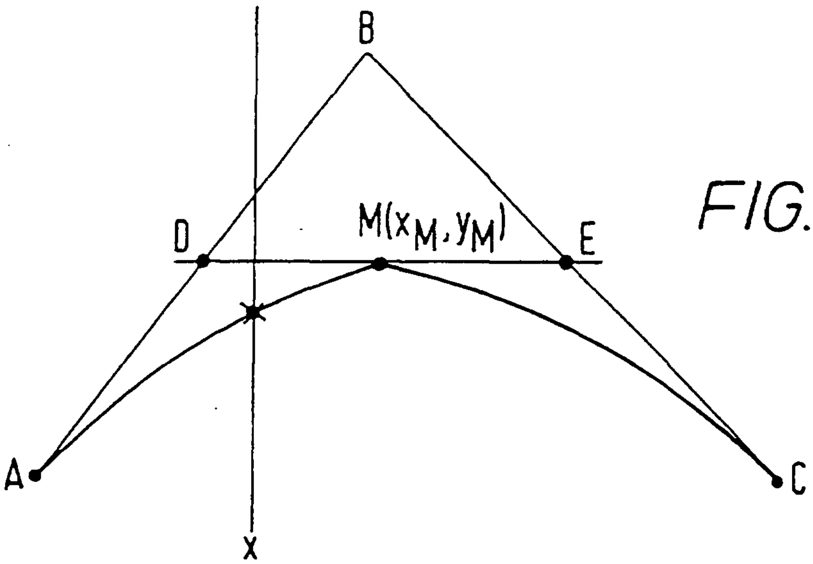


FIG.7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0267890 A
- EP 0322918 A
- EP 0322919 A
- EP 534794 A
- EP 0473147 A2
- WO 9209438 A1
- US 5204959 A
- EP 0497352 A2
- DE 3610182 A1
- GB 9212004 A